(19) Europäisches Patentamt / European Patent Office / Office européen des brevets

(11) **EP 2 530 573 B1**

(12) **EUROPEAN PATENT SPECIFICATION**

(45) Date of publication and mention
of the grant of the patent:
**24.10.2018 Bulletin 2018/43**

(51) Int Cl.:
*G06F 3/0486* (2013.01)   *G06F 3/0488* (2013.01)
*G06F 1/16* (2006.01)

(21) Application number: **11175946.0**

(22) Date of filing: **29.07.2011**

(54) **Touch control method and electronic apparatus**

Berührungssteuerverfahren und elektronische Vorrichtung

Procédé de contrôle tactile et appareil électronique

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.05.2011 TW 100119030**

(43) Date of publication of application:
**05.12.2012 Bulletin 2012/49**

(73) Proprietor: **Acer Incorporated
New Taipei City 221 (TW)**

(72) Inventor: **Yeung, Sip Kim
New Taipei City 221 (TW)**

(74) Representative: **Chamberlain, Alan James
Haseltine Lake LLP
Redcliff Quay
120 Redcliff Street
Bristol BS1 6HU (GB)**

(56) References cited:
**US-A1- 2003 210 285     US-A1- 2011 047 459**

**Description**

BACKGROUND OF THE INVENTION

1. Field of the Invention

The invention generally relates to a touch control method and an electronic apparatus, and more particularly, to a touch control method operating two screens and an electronic apparatus.

2. Description of Related Art

Nowadays, media production relies mostly on notebooks or netbooks, while media consumption takes place mostly on tablet PCs and smart phones. Netbooks offer such advantages as low cost, high portability, and low productivity requirement therefore are the most potential electronic product for undertaking both media production and media consumption.

To be specific, media production demands high productivity but has low requirement to input device such as touch panel or touch screen. Apparatuses satisfying such criteria include desktop computers, all-in-one computers, and notebooks. Regarding media consumption, high portability and operability are demanded, and touch screen is usually adopted as the input and display device to reduce the volume and weight of the apparatus. Apparatuses satisfying such criteria include tablet PCs and smart phones. To achieve both high productivity and high operability, in some existing notebooks, the conventional keyboards and touch pads are replaced with touch screens as the input devices of these notebooks. Such notebooks may be dual-screen notebooks.

However, each of aforementioned apparatuses has its limitations. If high productivity is emphasized, the convenience of touch operation has to be sacrificed. If high portability and high operability are emphasized, no physical keyboard should be adopted. If both high productivity and high operability are to be achieved, the production cost will be greatly increased. Thereby, a resolution which offers both high productivity and convenient touch operation is to be provided.

US 2011/047459 describes a user interface for a data processing machine.

SUMMARY OF THE INVENTION

Accordingly, the invention is directed to a touch control method according to claim 1 and an electronic apparatus according to claim 10 in which both high productivity and operation convenience are achieved. Further aspects of the invention are outlined in the dependent claims. Embodiments which do not fall within the scope of the claims do not describe part of the present invention.

BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.

FIG. 1 is a diagram of an electronic apparatus according to an embodiment of the invention.
FIG. 2 is a flowchart of a touch control method according to an embodiment of the invention.
FIG. 3 illustrates an example of a touch control method according to an embodiment of the invention.
FIG. 4 illustrates an example of a touch control method according to an embodiment of the invention.
FIG. 5 illustrates an example of a touch control method according to an embodiment of the invention.
FIG. 6 illustrates an example of a touch control method according to an embodiment of the invention.
FIG. 7 illustrates an example of a touch control method according to an embodiment of the invention.
FIG. 8 is a flowchart of a touch control method according to an embodiment of the invention.
FIG. 9 illustrates an example of corresponding positions of touch points according to an embodiment of the invention.

DESCRIPTION OF THE EMBODIMENTS

Reference will now be made in detail to the present preferred embodiments of the invention, examples of which are illustrated in the accompanying drawings. Wherever possible, the same reference numbers are used in the drawings and the description to refer to the same or like parts.

In the invention, no touch panel is disposed on the main screen of a notebook. Instead, a touch screen of smaller size (2" to 3.5") is used to replace a general touch pad as the input device of the notebook, and the touch screen is divided into two portions to respectively operate the frames displayed on the main screen and the touch screen. Through control over the touch screen and operations of the main screen and the touch screen, an electronic apparatus provided by the invention offers both high productivity and operation convenience.

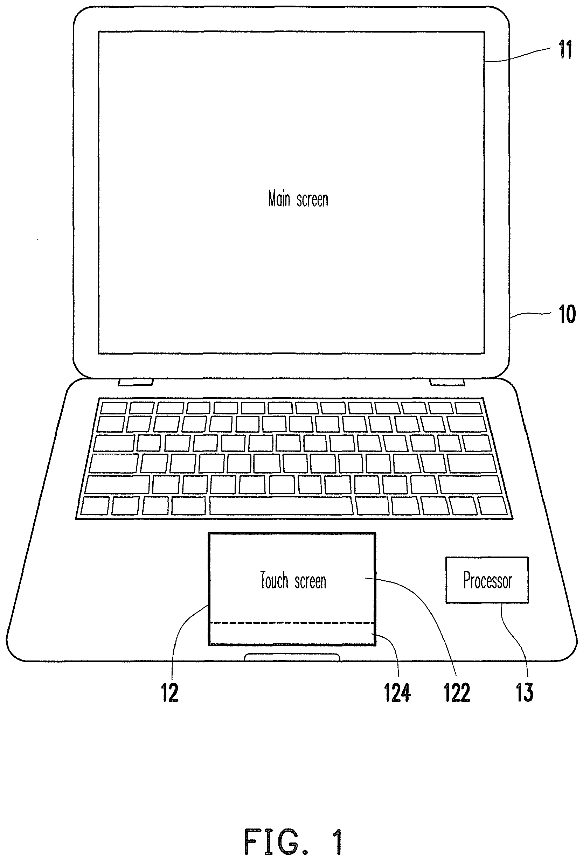

FIG. 1 is a diagram of an electronic apparatus according to an embodiment of the invention. Referring to FIG. 1, the electronic apparatus 10 in the present embodiment may be a notebook or a netbook including a main screen 11, a touch screen 12, and a processor 13. The functions of the main screen 11, the touch screen 12, and the processor 13 will be respectively explained below.

The main screen 11 may be a liquid crystal display (LCD), a light-emitting diode (LED) display, a field emission display (FED), or any other type of display.

The touch screen 12 may be a resistive, capacitive, or any other type of touch panel integrated with aforementioned display. The touch screen 12 provides both display and input functions. In the present embodiment, the touch screen 12 is divided into a first portion 122 and a second portion 124 for detecting touch operations performed by a user. The first portion 122 and the second portion 124 may be respectively the upper portion and the lower portion of the touch screen 12 separated by a dividing line. However, the invention is not limited herein, and the touch screen 12 may also be divided in other patterns.

The processor 13 may be a central processing unit (CPU) in the advanced RISC machine (ARM) structure, a general or special programmable microprocessor, a digital signal processor (DSP), a programmable controller, an application specific integrated circuit (ASIC), a programmable logic device (PLD), or any other similar device. The processor 13 executes all operations of the electronic apparatus 10 and controls frames displayed on the main screen 11 and the touch screen 12.

The operating system of a processor 13 in the ARM structure can support four displays and the display of two video streams at the same time. In the electronic apparatus 10 provided by the invention, the main screen 11 can be switched to an external device adopting a cathode ray tube (CRT) or a high-definition multimedia interface (HDMI), and meanwhile, the touch screen 12 is not affect and can provide touch control over the main screen 11 and the touch screen 12.

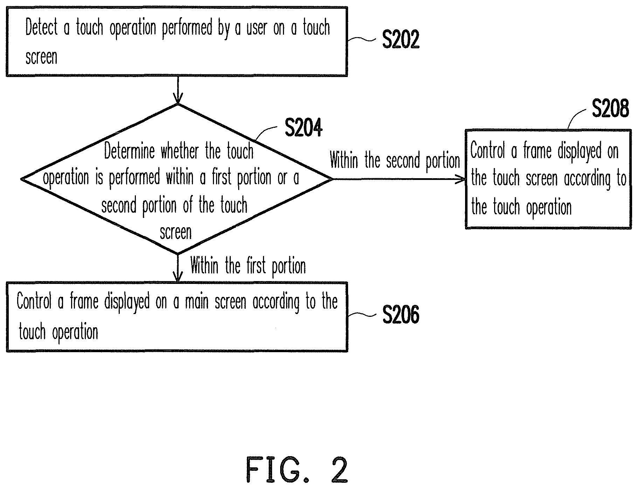

FIG. 2 is a flowchart of a touch control method according to an embodiment of the invention. Referring to FIG. 2, the touch control method in the present embodiment is adapted to the electronic apparatus 10 in FIG. 1. Below, the touch control method provided by the invention will be described in detail with reference to various components of the electronic apparatus 10.

First, the processor 13 detects a touch operation performed by a user on the touch screen 12 (step S202). Herein the touch screen 12 continuously detects the touch operation performed by the user by using a finger or any other object, generates a corresponding touch signal, and provides the touch signal to the processor 13 such that the processor 13 can detect or identify the user's touch operation.

Then, the processor 13 determines whether the touch operation is performed within the first portion 122 or the second portion 124 of the touch screen 12 (step S204). Herein the processor 13 obtains the division pattern of the first portion 122 and the second portion 124 on the touch screen 12 from the operating system or another application program and determines whether the touch operation is within the first portion 122 or the second portion 124 of the touch screen 12 according to the division pattern.

If the processor 13 determines that the touch operation is performed within the first portion 122 of the touch screen 12, the processor 13 controls the frame displayed on the main screen 11 according to the touch operation (step S206). To be specific, the touch operation detected by the processor 13 may be a tap, a double tap, a long tap, or a touch and drag operation, wherein the trajectory of the touch and drag operation can be further used for determining a cursor movement and a gesture.

The processor 13 controls the movement of a cursor in the frame displayed on the main screen 11 according to the movement trajectory of the touch operation within the first portion 122 of the touch screen 12. On the other hand, the processor 13 can further determine a gesture produced by the movement of the touch operation within the first portion 122 of the touch screen 12 and controls the frame displayed on the main screen 11 to execute an operation corresponding to the gesture accordingly.

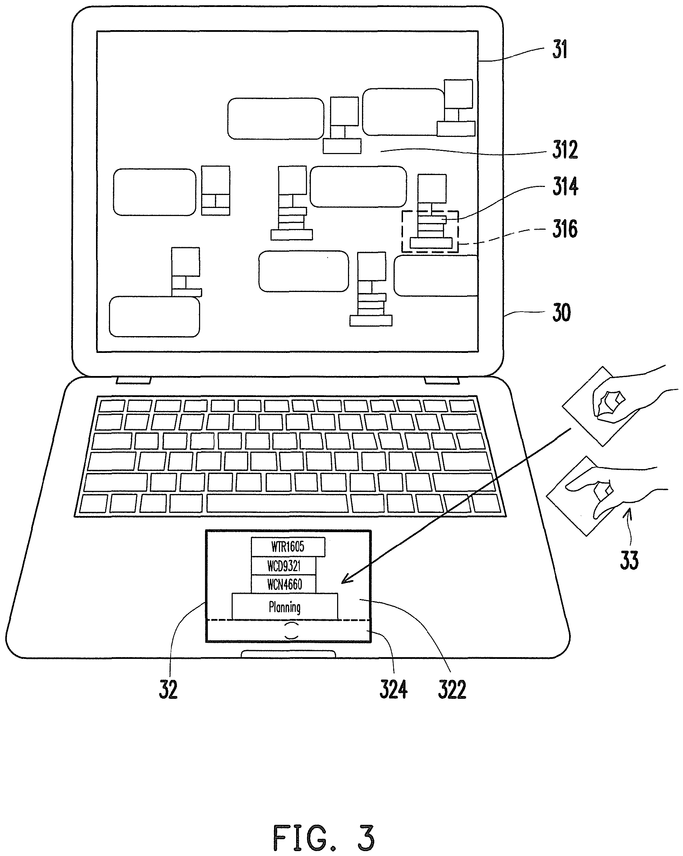

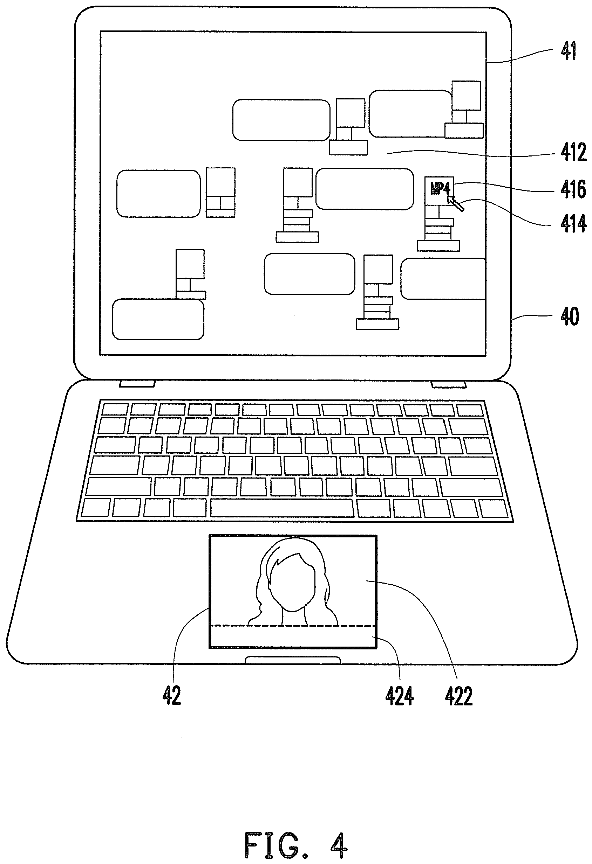

FIG. 3 and FIG. 4 illustrate examples of the touch control method according to an embodiment of the invention. Referring to FIG. 3 first, the electronic apparatus 30 displays a browsing frame of a file 312 on the main screen 31, and the touch screen 32 is divided into a first portion 322 and a second portion 324.

First, a user performs a touch and drag operation in the first portion 322 of the touch screen 32 to move a cursor (not shown) from the main screen 31 to the side of an object 314. Then, the user performs a pinch out touch operation 33 in the first portion 322 of the touch screen 32 to open a select box 316 around the object 314 and enlarge and display the image in the select box 316 on the touch screen 32. After that, the user further performs another touch and drag operation in the first portion 322 of the touch screen 32 to move the select box 316 displayed on the main screen 31 and correspondingly change the enlarged image displayed on the touch screen 32.

Thereafter, referring to FIG. 4, the electronic apparatus 40 displays a browsing frame of a file 412 on the main screen 41, and the touch screen 42 is divided into a first portion 422 and a second portion 424. First, a user performs a touch and drag operation in the first portion 422 of the touch screen 42 to move a cursor 414 displayed on the main screen 41 onto an object 416. Then, the user performs a touch operation (for example, a tap) in the first portion 422 of the touch screen 42 to select the object 416 displayed on the main screen 41. Finally, the user performs another touch operation (for example, a double tap) in the first portion 422 of the touch screen 42 to display or play the object 416 selected on the main screen 41 on the touch screen 42.

In step S204 illustrated in FIG. 2, if the processor 13 determines that the touch operation is performed within the second portion 124 of the touch screen 12, the processor 13 controls the frame displayed on the touch screen 12 according to the touch operation (step S208). Herein the processor 13 determines a gesture produced by the movement of the touch operation within the second portion 124 of the touch screen 12 and controls the frame displayed on the touch screen 12 to execute an operation corresponding to the gesture accordingly.

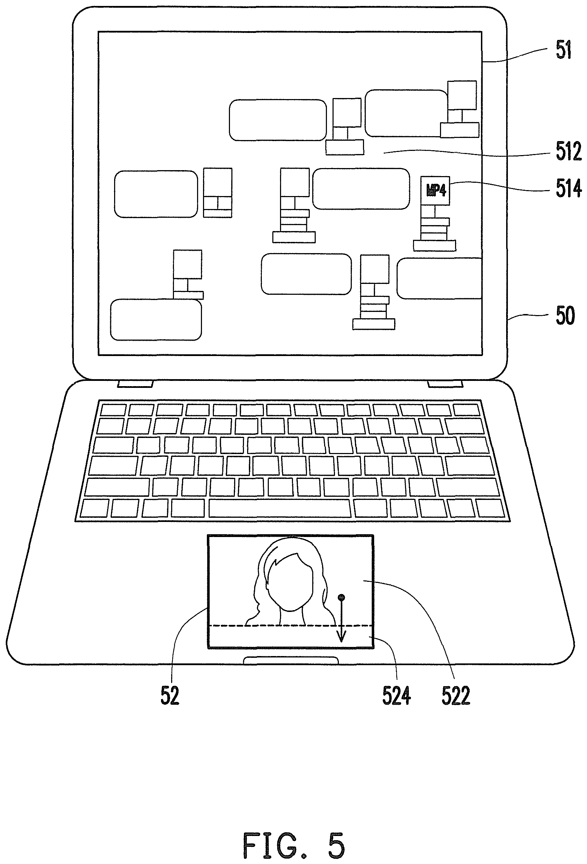

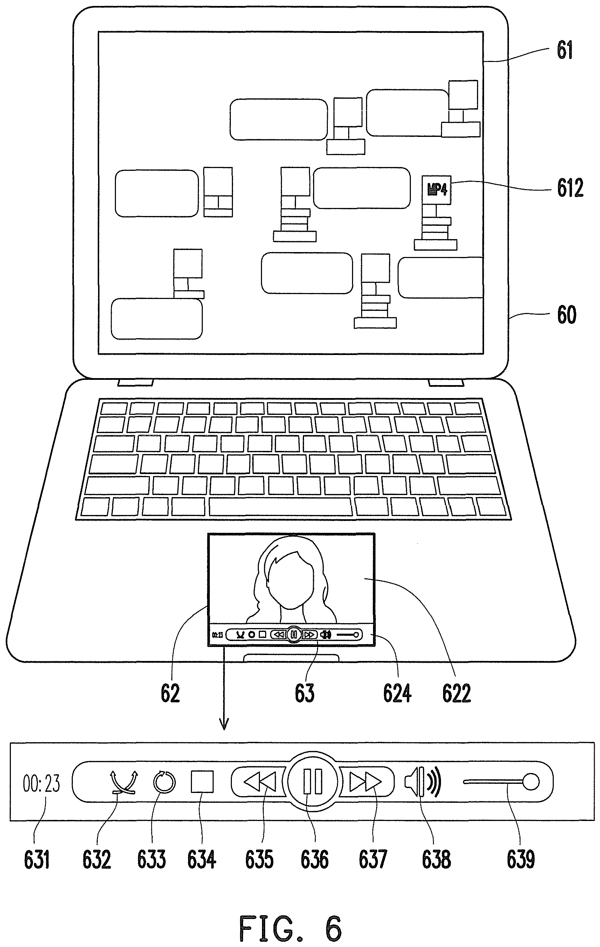

FIG. 5 and FIG. 6 illustrate examples of a touch control method according to an embodiment of the invention. Referring to FIG. 5 first, the electronic apparatus 50 displays a browsing frame of a file 512 on the main screen 51. A user performs a touch operation (for example, a touch and drag operation) in the first portion 522 of the touch screen 52 to select an object 514 displayed on the main screen 51. When the touch and drag touch operation moves from the first portion 522 to the second portion 524 (i.e., crosses over the dividing line between the two portions) of the touch screen 52, the electronic apparatus 50 drags the object 514 selected on the main screen 51 to the touch screen 52 to display or play.

Next, referring to FIG. 6, similar to the example illustrated in FIG. 5, the electronic apparatus60 in the present embodiment further displays a control bar 63 for operating the object 612 in the second portion 624 of the touch screen 62 when the object 612 is dragged to the touch screen 62 to be displayed or played. Besides a play time 631, the control bar 63 also displays a plurality of operation buttons (including a random play button 632, a recurrent play button 633, a stop button 634, a rewind button 635, a play/pause button 636, a forward button 637, a mute button 638, and a volume adjustment bar 639). The electronic apparatus 60 receives a touch operation performed by a user on any one of the operation buttons and executes an operation function corresponding to the operation button on the object 612.

It should be noted that displaying a control bar in the second portion of the touch screen is only an embodiment of the invention. However, the invention is not limited thereto, and in another embodiment, the second portion of the touch screen can also be configured to detect and determine a gesture corresponding to a touch operation performed by a user, so as to execute an operation corresponding to the gesture on a frame or objet displayed on the touch screen.

Aforementioned gesture may be a tap, a double tap, a long tap, a flick, a panning, a pinch, a two-finger long tap, or a three-finger or four-finger click, drag, or long press, etc. Besides, aforementioned gesture may also be corresponding to a pattern formed by a touch and drag operation performed by the user on the touch screen by using a single finger (for example, dragging a rectangular or circular trajectory). However, aforementioned gestures are only examples, and the scope thereof is not limited herein. Those skilled in the art can associate different gestures to different operation functions according to the actual requirement.

The invention further provides an instant switching mechanism regarding the method described above of controlling the main screen and the touch screen by using different portions of the touch screen, in which a user is allowed to control the main screen and the touch screen by using the entire touch screen or different portions of the touch screen in any situation. This will be explained below with reference to an embodiment.

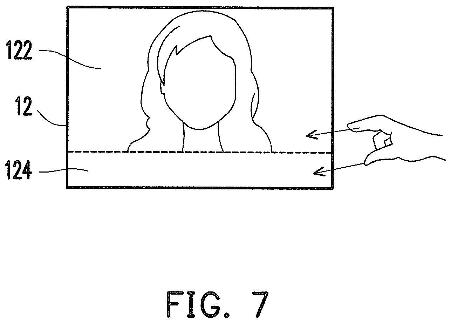

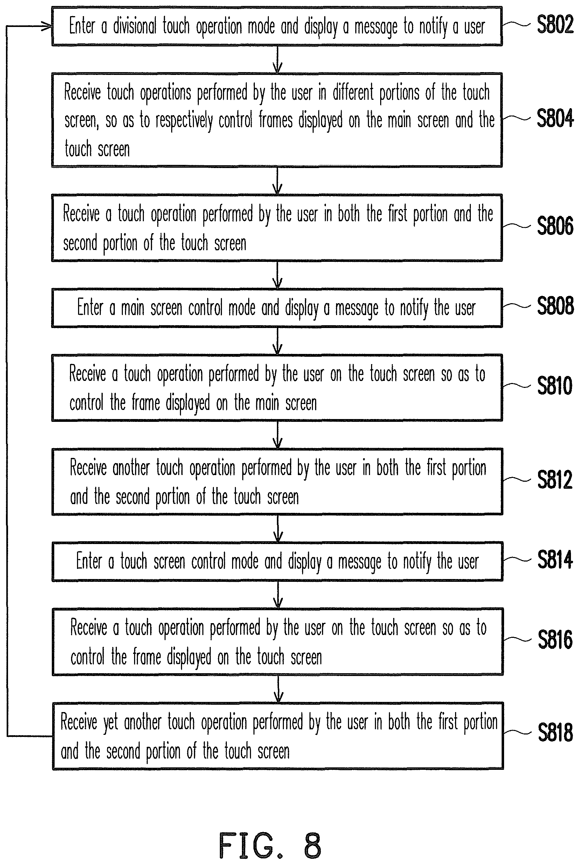

FIG. 7 illustrates an example of a touch control method according to an embodiment of the invention. FIG. 8 is a flowchart of a touch control method according to an embodiment of the invention. Referring to FIG. 7, in the present embodiment, a user uses two fingers to touch the first portion 122 and the second portion 124 of the touch screen 12 at the same time, so as to switch between different touch operation modes.

Next, referring to FIG. 8, when the processor 13 executes an application program supporting divisional touch operations or receives a divisional touch operation instruction issued by a user, the processor 13 enters a divisional (i.e., dividing the touch screen into a first portion and a second portion) touch operation mode and displays a message on the main screen 11 to notify the user (step S802). In this mode, the processor 13 can receive touch operations performed by the user in different portions of the touch screen 12 to respectively control the frames displayed on the main screen 11 and the touch screen 12 (step S804).

While displaying a frame, the processor 13 continuously detects any touch operation performed by the user on the touch screen 12. When the processor 13 receives a touch operation performed by the user in both the first portion and the second portion (step S806), the processor 13 enters a main screen control mode and displays a message on the main screen 11 or the touch screen 12 to notify the user (step S808). In this mode, the processor 13 can receive a touch operation performed by the user on the touch screen 12 and control the frame displayed on the main screen 11 according to the touch operation regardless of whether the touch operation is performed in the first portion or the second portion (step S810).

When the processor 13 receives another touch operation performed by the user in both the first portion and the second portion (step S812), the processor 13 enters a touch screen control mode and displays a message on the main screen 11 or the touch screen 12 to notify the user (step S814). In this mode, the processor 13 can receive a touch operation performed by the user on the touch screen 12 and control the frame displayed on the touch screen 12 according to the touch operation regardless of whether the touch operation is performed in the first portion or the second portion (step S816). Finally, when the processor 13 receives yet another touch operation performed by the user in both the first portion and the second portion (step S818), step S802 is executed again to enter the divisional touch operation mode and display a message on the main screen 11 to notify the user.

Additionally, in the invention, when the first portion and the second portion of the touch screen detect touch operations performed by a user, a detected touch point may respectively correspond to a control point on the main screen and the touch screen according to the proportional relation between the first portion and the main screen and the proportional relation between the second portion and the touch screen and can be used for controlling an object corresponding to the control point on the main screen or the touch screen.

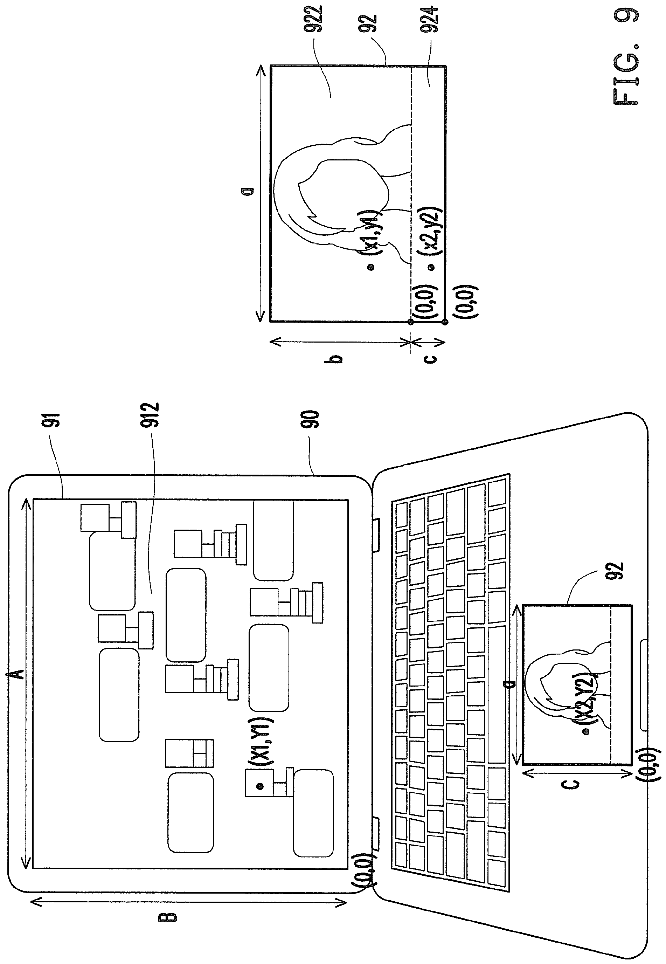

FIG. 9 illustrates an example of corresponding positions of touch points according to an embodiment of the invention. Referring to FIG. 9, in the electronic apparatus 90 of the present embodiment, the size of the main screen 91 is A×B, and the size of the touch screen 92 is a×C, wherein the size of the first portion is a×b, and the size of the second portion is a×c.

In the present embodiment, the touch point of a touch operation in the first portion of the touch screen 92 corresponds to a control point on the main screen according to the proportional relation between the size A×B and the size a×b, and the touch point of the touch operation in the second portion of the touch screen corresponds to a control point on the touch screen according to the proportional relation between the size a×C and the size a×c.

When the user touches the touch point $(x1, y1)$ in the first portion of the touch screen, the coordinates of the corresponding control point on the main screen are $(X1, Y1)$, and the proportional relation is:

$$X1 = (A/a) \times x1$$

$$Y1 = (B/b) \times y1$$

On the other hand, when the user touches the touch point $(x2, y2)$ in the second portion of the touch screen, the coordinates of the corresponding control point on the touch screen are $(X2, Y2)$, and the proportional relation is:

$$X2 = x2$$

$$Y2 = (C/c) \times y2$$

Aforementioned proportional relation is directly corresponding to the sizes of the touch screen and the main screen. However, the scope of the proportional relation is not limited herein, and in another embodiment, the proportional relation may be multiplied by a weight according to the user's requirement. To be specific, the proportional relation between the first portion of the touch screen and the main screen is a ratio obtained by scaling the size a×b to the size A×B and multiplying by a weight w1, and the proportional relation between the second portion of the touch screen and the touch screen itself is a ratio obtained by scaling the size a×c to the size a×C and multiplying by a weight w2, wherein the weights w1 and w2 are any numerical values greater than 1.

In summary, the invention provides a touch control method and an electronic apparatus, in which the control mode of the touch screen is instantly switched through control over the touch screen and operations of the main screen and the touch screen according to the user requirement, so that the electronic apparatus in the invention achieves both high productivity and operation convenience.

It will be apparent to those skilled in the art that various modifications and variations can be made to the structure of the invention without departing from the scope of the appended claims. In view of the foregoing, it is intended that the invention cover modifications and variations of this invention provided they fall within the scope of the following claims.

## Claims

1. A touch control method, adapted to an electronic apparatus (10) having a main screen (11) and a touch screen (12), wherein the touch screen (12) is divided into a first portion (122) and a second portion (124), the touch control method comprising:

   detecting (S202) a touch operation performed by a user on the touch screen (12);
   determining (S204) whether the touch operation is performed within the first portion (122) or the second portion (124) of the touch screen (12);
   controlling (S206) a frame displayed on the main screen (11) according to the touch operation when the touch operation is performed within the first portion (122) of the touch screen (12); and
   controlling (S208) a frame displayed on the touch screen (12) according to the touch operation when the touch operation is performed within the second portion (124) of the touch screen (12), and
   the touch control method being **characterized by**:

      when the touch operation is performed in both the first portion (122) and the second portion (124) of the touch screen (12), switching the touch operation performed in the first portion (122) and the second portion (124) of the touch screen (12) from a first one to a second one of the following control modes:

         controlling only the frame displayed on the main screen (11);
         controlling only the frame displayed on the touch screen (12); and
         respectively controlling the frame displayed on the main screen (11) and the frame displayed on the touch screen (12).

2. The touch control method according to claim 1, wherein the step of controlling the frame displayed on the main screen (11) according to the touch operation comprises:

> controlling movement of a cursor (414) in the frame displayed on the main screen (11) according to a movement trajectory of the touch operation within the first portion (122) of the touch screen (12).

3. The touch control method according to any one of claims 1 to 2, wherein the step of controlling the frame displayed on the main screen (11) according to the touch operation comprises:

> determining a gesture produced by movement of the touch operation within the first portion (122) of the touch screen (12); and controlling the frame displayed on the main screen (11) to execute an operation corresponding to the gesture.

4. The touch control method according to any one of claims 1 to 3, wherein the step of controlling the frame displayed on the main screen (11) according to the touch operation comprises:

> selecting an object (314, 416) displayed on the main screen (11) according to the touch operation within the first portion (122) of the touch screen (12); and displaying or playing the object (314, 416) selected from the main screen (11) on the touch screen (12) according to another touch operation within the first portion (122) of the touch screen (12).

5. The touch control method according to any one of claims 1 to 4, wherein the step of controlling the frame displayed on the main screen (11) according to the touch operation comprises:

> selecting an object (514) displayed on the main screen (11) according to the touch operation within the first portion (122) of the touch screen (12); and dragging the object (514) selected from the main screen (11) to the touch screen (12) when the touch operation moves from the first portion (122) to the second portion (124).

6. The touch control method according to claim 5, wherein after the step of dragging the object selected from the main screen (11) to the touch screen (12), the touch control method further comprises:

> displaying a control bar (63) for operating the object (612) in the second portion (124) of the touch screen (12), wherein the control bar comprises a plurality of operation buttons (632-639); and receiving a touch operation performed by the user on one of the operation buttons (632-639), and executing an operation function corresponding to the operation button (632-639) on the object (612).

7. The touch control method according to any one of claims 1 to 6, wherein the step of controlling the frame displayed on the touch screen (12) according to the touch operation comprises:

> determining a gesture produced by movement of the touch operation on the touch screen (12); and controlling the frame displayed on the touch screen (12) to execute an operation corresponding to the gesture.

8. The touch control method according to any one of claims 1 to 7, wherein the main screen (11) has a first size, the touch screen (12) has a second size, the first portion (122) of the touch screen (12) has a third size, and the second portion (124) of the touch screen (12) has a fourth size, wherein a touch point of the touch operation in the first portion (122) of the touch screen (12) corresponds to a first control point on the main screen (11) according to a first proportional relation between the first size and the third size, and a touch point of the touch operation in the second portion (124) of the touch screen (12) corresponds to a second control point on the touch screen (12) according to a second proportional relation between the second size and the fourth size.

9. The touch control method according to claim 8, wherein the first proportional relation is a first ratio obtained by scaling the third size to the first size and multiplying by a first weight, and the second proportional relation is a second ratio obtained by scaling the fourth size to the second size and multiplying by a second weight, wherein the first weight and the second weight are any numerical values greater than 1.

10. An electronic apparatus (10), comprising:

> a main screen (11); a touch screen (12), divided into a first portion (122) and a second portion (124), for detecting a touch operation performed by a user; and a processor (13), coupled to the main screen (11) and the touch screen (12), adapted to receive the touch operation detected by the touch screen (12) and determine whether the touch operation is performed within the first portion (122) or the second portion (124) of the touch screen (12), wherein

when the touch operation is performed within the first portion (122) of the touch screen (12), the processor (13) is adapted to control a frame displayed on the main screen (11) according to the touch operation; and

when the touch operation is performed within the second portion (124) of the touch screen (12), the processor (13) is adapted to control a frame displayed on the touch screen (12) of the touch operation,

wherein the processor (13) is **characterized by** being further adapted to, when the processor (13) determines that the touch operation is performed in both the first portion (122) and the second portion (124) of the touch screen (12), switch the touch operation performed in the first portion (122) and the second portion (124) of the touch screen (12) from a first one to a second one of the following control modes:

controlling only the frame displayed on the main screen (11);

controlling only the frame displayed on the touch screen (12); and

respectively controlling the frame displayed on the main screen (11) and the frame displayed on the touch screen (12).

11. The electronic apparatus according to claim 10, wherein the processor is adapted to (13) control movement of a cursor in the frame displayed on the main screen (11) according to a movement trajectory of the touch operation within the first portion (122) of the touch screen (12).

12. The electronic apparatus according to any one of claims 10 to 11, wherein the processor (13) is adapted to determine a gesture produced by movement of the touch operation within the first portion (122) of the touch screen (12) and control the frame displayed on the main screen (11) to execute an operation corresponding to the gesture.

13. The electronic apparatus according to any one of claims 10 to 12, wherein the processor (13) is adapted to select an object displayed on the main screen according to the touch operation within the first portion (122) of the touch screen (12) and display or play the object selected from the main screen (11) on the touch screen (12) according to another touch operation within the first portion (122) of the touch screen (12).

14. The electronic apparatus according to any one of claims 10 to 13, wherein the processor (13) is adapted to select an object displayed on the main screen (11) according to the touch operation within the first portion (122) of the touch screen (12) and drag the object selected from the main screen (11) to the touch screen (12) when the touch operation moves from the first portion (122) to the second portion (124).

15. The electronic apparatus according to claim 14, wherein the processor (13) is adapted such that after the object selected from the main screen (11) is dragged to the touch screen (12), the processor (13) further displays a control bar for operating the object in the second portion (124) of the touch screen (12), wherein the control bar comprises a plurality of operation buttons, and the processor (13) is adapted to receive a touch operation performed by the user on one of the operation buttons and execute an operation function corresponding to the operation button on the object.

16. The electronic apparatus according to any one of claims 10 to 15, wherein the processor (13) is adapted to determine a gesture produced by movement of the touch operation on the touch screen (12) and control the frame displayed on the touch screen (12) to execute an operation corresponding to the gesture.

17. The electronic apparatus according to any one of claims 10 to 16, wherein the main screen (11) has a first size, the touch screen (12) has a second size, the first portion (122) of the touch screen (12) has a third size, and the second portion (124) of the touch screen (12) has a fourth size, wherein a touch point of the touch operation in the first portion (122) of the touch screen (12) corresponds to a first control point on the main screen (11) according to a first proportional relation between the first size and the third size, and a touch point of the touch operation in the second portion (124) of the touch screen (12) corresponds to a second control point on the touch screen (12) according to a second proportional relation between the second size and the fourth size.

18. The electronic apparatus according to claim 17, wherein the first proportional relation is a first ratio obtained by scaling the third size to the first size and multiplying by a first weight, and the second proportional relation is a second ratio obtained by scaling the fourth size to the second size and multiplying by a second weight, wherein the first weight and the second weight are any numerical values greater than 1.

**Patentansprüche**

1. Berührungssteuerungsverfahren, angepasst an ein elektronisches Gerät (10) mit einem Hauptbildschirm (11) und einem Touchscreen (12), wobei der Touchscreen (12) in einen ersten Abschnitt (122) und einen zweiten Abschnitt (124) unterteilt ist, wobei das Berührungssteuerungsverfahren umfasst:

Erfassen (S202) einer von einem Benutzer auf dem Touchscreen (12) ausgeführten Berührung;
Bestimmen (S204), ob die Berührung innerhalb des ersten Abschnitts (122) oder des zweiten Abschnitts (124) des Touchscreens (12) ausgeführt wird;
Steuerung (S206) eines auf dem Hauptbildschirm (11) angezeigten Rahmens, der entsprechend der Berührung angezeigt wird, wenn die Bedienung innerhalb des ersten Abschnitts (122) des Touchscreens (12) ausgeführt wird; und
Steuerung (S208) eines auf dem Touchscreen (12) angezeigten Rahmens, der entsprechend der Berührung angezeigt wird, wenn die Berührung innerhalb des zweiten Abschnitts (124) des Touchscreens (12) ausgeführt wird, und
wobei das Berührungssteuerungsverfahren **gekennzeichnet ist durch**:

wenn die Berührung sowohl im ersten Abschnitt (122) als auch im zweiten Abschnitt (124) des Touchscreens (12) ausgeführt wird,
Umschalten der im ersten Abschnitt (122) und zweiten Abschnitt (124) des Touchscreens (12) durchgeführten Berührungen von einem ersten auf einen zweiten der folgenden Steuerungsmodi:

nur den auf dem Hauptbildschirm angezeigten Rahmen zu steuern (11);
nur den auf dem Touchscreen (12) angezeigten Rahmen zu steuern; und
jeweils den auf dem Hauptbildschirm (11) angezeigten Rahmen und den auf dem Touchscreen (12) angezeigten Rahmen zu steuern.

2. Berührungssteuerungsverfahren gemäß Anspruch 1, wobei der Schritt der Steuerung des Rahmens, der auf dem Hauptbildschirm (11) entsprechend der Berührung angezeigt wird, umfasst:

Steuerung der Bewegung eines Cursors (414) in dem auf dem Hauptbildschirm angezeigten Rahmen (11) entsprechend einer Bewegungsbahn der Berührung innerhalb des ersten Abschnitts (122) des Touchscreens (12).

3. Berührungssteuerungsverfahren gemäß einem der Ansprüche 1 bis 2, wobei der Schritt der Steuerung des auf dem Hauptbildschirm (11) angezeigten Rahmens gemäß der Berührung umfasst:

Bestimmen einer Geste, die durch die Bewegung der Berührung innerhalb des ersten Abschnitts (122) des Touchscreens (12) erzeugt wird; und
Steuerung des auf dem Hauptbildschirm (11) angezeigten Rahmens, um einen der Geste entsprechenden Vorgang auszuführen.

4. Berührungssteuerungsverfahren gemäß einem der Ansprüche 1 bis 3, wobei der Schritt der Steuerung des auf dem Hauptbildschirm (11) angezeigten Rahmens entsprechend der Berührung umfasst:

Auswählen eines Objekts (314, 416), das auf dem Hauptbildschirm (11) angezeigt wird, entsprechend der Berührung innerhalb des ersten Abschnitts (122) des Touchscreens (12); und
Anzeige oder Wiedergabe des Objekts (314, 416), das aus dem Hauptbildschirm (11) auf dem Touchscreen (12) entsprechend einer anderen Berührung innerhalb des ersten Abschnitts (122) des Touchscreens (12) ausgewählt wurde.

5. Berührungssteuerungsverfahren gemäß einem der Ansprüche 1 bis 4, wobei der Schritt der Steuerung des auf dem Hauptbildschirm (11) angezeigten Rahmens gemäß der Berührung umfasst:

Auswählen eines auf dem Hauptbildschirm (11) angezeigten Objekts (514) gemäß der Berührung innerhalb des ersten Abschnitts (122) des Touchscreens (12); und
Ziehen des vom Hauptbildschirm (11) ausgewählten Objekts (514) auf den Touchscreen (12), wenn sich die Berührung vom ersten Abschnitt (122) zum zweiten Abschnitt (124) bewegt.

6. Berührungssteuerungsverfahren gemäß Anspruch 5, wobei nach dem Schritt des Ziehens des vom Hauptbildschirm (11) ausgewählten Objekts auf den Touchscreen (12) das Berührungssteuerungsverfahren ferner umfasst:

Anzeigen einer Steuerleiste (63) zum Bedienen des Objekts (612) im zweiten Abschnitt (124) des Touchscreens (12), wobei die Steuerleiste eine Vielzahl von Bedienschaltflächen (632-639) umfasst; und
Empfang einer vom Benutzer auf einer der Bedienschaltflächen (632-639) ausgeführten Berührungsfunktion, die der Bedienschaltfläche (632-639) auf dem Objekt (612) entspricht.

7. Berührungssteuerungsverfahren gemäß einem der Ansprüche 1 bis 6, wobei der Schritt der Steuerung des auf dem Toucscreen (12) angezeigten Rahmens nach der Berührung umfasst:

   Bestimmen einer Geste, die durch die Bewegung der Berührung auf dem Touchscreen (12) erzeugt wird; und
   Steuerung des auf dem Touchscreen (12) angezeigten Rahmens, um einen der Geste entsprechenden Vorgang auszuführen.

8. Berührungssteuerungsverfahren gemäß einem der Ansprüche 1 bis 7, wobei der Hauptbildschirm (11) eine erste Größe hat, der Touchscreen (12) eine zweite Größe, der erste Abschnitt (122) des Touchscreens (12) eine dritte Größe und der zweite Abschnitt (124) des Touchscreens (12) eine vierte Größe, wobei ein Berührungspunkt der Berührung im ersten Abschnitt (122) des Touchscreens (12) einem ersten Steuerpunkt auf dem Hauptbildschirm (11) gemäß einer ersten proportionalen Beziehung zwischen der ersten Größe und der dritten Größe entspricht und ein Berührungspunkt der Berührung im zweiten Abschnitt (124) des Touchscreens (12) einem zweiten Steuerpunkt auf dem Touchscreen (12) nach einem zweiten proportionalen Verhältnis zwischen der zweiten Größe und der vierten Größe entspricht.

9. Berührungssteuerungsverfahren gemäß Anspruch 8, wobei die erste proportionale Beziehung ein erstes Verhältnis ist, das durch Skalieren der dritten Größe auf die erste Größe und Multiplizieren mit einem ersten Gewicht erhalten wird, und die zweite proportionale Beziehung ein zweites Verhältnis ist, das durch Skalieren der vierten Größe auf die zweite Größe und Multiplizieren mit einem zweiten Gewicht erhalten wird, wobei das erste Gewicht und das zweite Gewicht beliebige Zahlenwerte größer als 1 sind.

10. Elektronisches Gerät (10), umfassend:

   einen Hauptbildschirm (11);
   einen Touchscreen (12), der in einen ersten Abschnitt (122) und einen zweiten Abschnitt (124) unterteilt ist, zum Erkennen einer von einem Benutzer ausgeführten Berührung; und
   einen Prozessor (13), der mit dem Hauptbildschirm (11) und dem Touchscreen (12) gekoppelt ist, angepasst um die vom Touchscreen (12) erkannte Berührung zu empfangen und festzustellen, ob die Berührung innerhalb des ersten Abschnitts (122) oder des zweiten Abschnitts (124) des Touchscreens (12) ausgeführt wird, wobei
   wenn die Berührung innerhalb des ersten Abschnitts (122) des Touchscreens (12) ausgeführt wird, der Prozessor (13) angepasst ist, um einen auf dem Hauptbildschirm (11) angezeigten Rahmen entsprechend der Berührung zu steuern; und
   wenn die Berührung innerhalb des zweiten Abschnitts (124) des Touchscreens (12) ausgeführt wird, der Prozessor (13) angepasst ist, um einen Rahmen zu steuern, der auf dem Touchscreen (12) der Berührung angezeigt wird,
   wobei der Prozessor (13) **dadurch gekennzeichnet ist, dass** er ferner angepasst ist, um, wenn der Prozessor (13) bestimmt, dass die Berührung sowohl im ersten Abschnitt (122) als auch im zweiten Abschnitt (124) des Touchscreens (12) ausgeführt wird, von einem ersten auf einen zweiten der folgenden Steuerungsmodi zu schalten:

   nur den auf dem Hauptbildschirm (11) angezeigten Rahmen zu steuern;
   nur den auf dem Touchscreen (12) angezeigten Rahmen zu steuern; und
   jeweils den auf dem Hauptbildschirm (11) angezeigten Rahmen und den auf dem Touchscreen (12) angezeigten Rahmen zu steuern.

11. Elektronisches Gerät gemäß Anspruch 10, wobei der Prozessor (13) angepasst ist, um die Bewegung eines Cursors in dem auf dem Hauptbildschirm (11) angezeigten Rahmen gemäß einer Bewegungsbahn der Berührung innerhalb des ersten Abschnitts (122) des Touchscreens (12) zu steuern.

12. Elektronisches Gerät gemäß einem der Ansprüche 10 bis 11, wobei der Prozessor (13) angepasst ist, um eine Geste zu bestimmen, die durch Bewegung der Berührung innerhalb des ersten Abschnitts (122) des Touchscreens (12) erzeugt wird, und den auf dem Hauptbildschirm (11) angezeigten Rahmen zu steuern, um einen Vorgang entsprechend der Geste auszuführen.

13. Elektronisches Gerät gemäß einem der Ansprüche 10 bis 12, wobei der Prozessor (13) angepasst ist, um ein auf dem Hauptbildschirm angezeigtes Objekt gemäß der Berührung innerhalb des ersten Abschnitts (122) des Touchscreens (12) auszuwählen und das aus dem Hauptbildschirm (11) ausgewählte Objekt auf dem Touchscreen (12) gemäß einer anderen Berührung innerhalb des ersten Abschnitts (122) des Touchscreens (12) anzuzeigen oder wiederzugeben.

**14.** Elektronisches Gerät gemäß einem der Ansprüche 10 bis 13, wobei der Prozessor (13) angepasst ist, um ein auf dem Hauptbildschirm (11) angezeigtes Objekt gemäß der Berührung innerhalb des ersten Abschnitts (122) des Touchscreens (12) auszuwählen und das von dem Hauptbildschirm (11) ausgewählte Objekt auf den Touchscreen (12) zu ziehen, wenn sich die Berührung vom ersten Abschnitt (122) zum zweiten Abschnitt (124) bewegt.

**15.** Elektronisches Gerät gemäß Anspruch 14, bei dem der Prozessor (13) so angepasst ist, dass nach dem Ziehen des vom Hauptbildschirms (11) ausgewählten Objekts auf den Touchscreen (12) der Prozessor (13) weiterhin eine Steuerleiste für die Bedienung des Objekts im zweiten Abschnitt (124) des Touchscreens (12) anzeigt, wobei die Steuerleiste eine Vielzahl von Bedienschaltflächen umfasst, und der Prozessor (13) angepasst ist, um eine Berührung zu empfangen, die vom Benutzer an einer der folgenden Stellen ausgeführt wird und eine Bedienfunktion auszuführen, die der Bedienschaltfläche auf der rechten Seite des Objekts entspricht.

**16.** Elektronisches Gerät gemäß einem der Ansprüche 10 bis 15, wobei der Prozessor (13) angepasst ist, um eine Geste zu bestimmen, die durch die Bewegung des Berührungsvorgangs auf dem Touchscreen (12) erzeugt wird, und den auf dem Touchscreen (12) angezeigten Rahmen zu steuern, um einen der Geste entsprechenden Vorgang auszuführen.

**17.** Elektronisches Gerät gemäß einem der Ansprüche 10 bis 16, wobei der Hauptbildschirm (11) eine erste Größe hat, der Touchscreen (12) eine zweite Größe, der erste Abschnitt (122) des Touchscreens (12) eine dritte Größe und der zweite Abschnitt (124) des Touchscreens (12) eine vierte Größe, wobei ein Berührungspunkt der Berührung im ersten Abschnitt (122) des Touchscreens (12) einem ersten Steuerpunkt auf dem Hauptbildschirm (11) gemäß einer ersten proportionalen Beziehung zwischen der ersten Größe und der dritten Größe entspricht, und ein Berührungspunkt der Berührung im zweiten Abschnitt (124) des Touchscreens (12) einem zweiten Steuerpunkt auf dem Touchscreen (12) gemäß einer zweiten proportionalen Beziehung zwischen der zweiten Größe und der vierten Größe entspricht.

**18.** Elektronisches Gerät gemäß Anspruch 17, wobei die erste proportionale Beziehung ein erstes Verhältnis ist, das durch Skalieren der dritten Größe auf die erste Größe und Multiplizieren mit einem ersten Gewicht erhalten wird, und die zweite proportionale Beziehung ein zweites Verhältnis ist, das durch Skalieren der vierten Größe auf die zweite Größe und Multiplizieren mit einem zweiten Gewicht erhalten wird, wobei das erste Gewicht und das zweite Gewicht beliebige Zahlenwerte größer als 1 sind.

**Revendications**

**1.** Un procédé de commande tactile, adapté à un appareil électronique (10) ayant un écran principal (11) et un écran tactile (12), dans lequel l'écran tactile (12) est divisé en une première partie (122) et une deuxième partie (124), le procédé de commande tactile comprenant :

détecter (S202) une opération tactile effectuée par un utilisateur sur l'écran tactile (12) ; déterminer (S204) si l'opération tactile est effectuée dans la première partie (122) ou la deuxième partie (124) de l'écran tactile (12) ; commander (S206) un cadre affiché sur l'écran principal (11) en fonction de l'opération tactile lorsque l'opération tactile est effectuée dans la première partie (122) de l'écran tactile (12) ; et commander (S208) un cadre affiché sur l'écran tactile (12) en fonction de l'opération tactile lorsque l'opération tactile est effectuée dans la deuxième partie (124) du l'écran tactile (12), et la méthode de commande tactile étant **caractérisée par** :

lorsque l'opération tactile est exécutée à la fois dans la première partie (122) et la deuxième partie (124) de l'écran tactile (12), le basculement de l'opération tactile effectuée dans la première partie (122) et la deuxième partie (124) de l'écran tactile (12) d'un premier à un second des modes de contrôle suivants :

contrôler seulement le cadre affiché sur l'écran principal (11) ; contrôler seulement le cadre affiché sur l'écran tactile (12) ; et contrôler le cadre affiché sur l'écran principal (11) et le cadre affiché sur l'écran tactile (12) respectivement.

**2.** Le procédé de commande tactile selon la revendication 1, dans lequel l'étape de contrôle du cadre affiché sur l'écran principal (11) en fonction de l'opération tactile comprend :

contrôler la commande du mouvement d'un curseur (414) dans le cadre affiché sur l'écran principal (11) en fonction d'une trajectoire de mouvement de l'opération tactile dans la première partie (122) de l'écran tactile (12).

**3.** Le procédé de commande tactile selon l'une quelconque des revendications 1 à 2, dans lequel l'étape de contrôle du cadre affiché sur l'écran principal (11) en fonction de l'opération tactile comprend :

déterminer un geste produit par le mouvement de l'opération tactile dans la première partie (122) de l'écran tactile (12) ; et contrôler le cadre affiché sur l'écran principal (11) en vue d'exécuter une opération correspondant au geste.

4. Le procédé de commande tactile selon l'une quelconque des revendications 1 à 3, dans lequel l'étape de commande du cadre affiché sur l'écran principal (11) en fonction de l'opération tactile comprend :

sélectionner un objet (314, 416) affiché sur l'écran principal (11) en fonction de l'opération tactile dans la première partie (122) de l'écran tactile (12) ; et afficher ou lire l'objet (314, 416) sélectionné à partir de l'écran principal (11) sur l'écran tactile (12) en fonction d'une autre opération tactile dans la première partie (122) de l'écran tactile (12).

5. Le procédé de commande tactile selon l'une quelconque des revendications 1 à 4, dans lequel l'étape de contrôle du cadre affiché sur l'écran principal (11) en fonction de l'opération tactile comprend :

sélectionner un objet (514) affiché sur l'écran principal (11) en fonction de l'opération tactile dans la première partie (122) de l'écran tactile (12) ; et faire glisser l'objet (514) sélectionné à partir de l'écran principal (11) vers l'écran tactile (12) lorsque l'opération tactile se déplace de la première partie (122) à la deuxième partie (124).

6. Le procédé de commande tactile selon la revendication 5, dans lequel après l'étape de déplacement de l'objet sélectionné depuis l'écran principal (11) vers l'écran tactile (12), le procédé de commande tactile comprend en outre :

afficher une barre de commande (63) pour faire fonctionner l'objet (612) dans la deuxième partie (124) de l'écran tactile (12), dans lequel la barre de commande comprend une pluralité de boutons d'opération (632-639) ; et recevoir une opération tactile effectuée par l'utilisateur sur l'un des boutons de commande (632-639) et exécuter une fonction de commande correspondant au bouton de commande (632-639) sur l'objet (612).

7. Le procédé de commande tactile selon l'une quelconque des revendications 1 à 6, dans lequel l'étape de commande du cadre affiché sur l'écran tactile (12) selon l'opération tactile comprend :

déterminer un geste produit par le déplacement de l'opération tactile sur l'écran tactile (12) ; et contrôler le cadre affiché sur l'écran tactile (12) pour exécuter une commande correspondant au geste.

8. Le procédé de commande tactile selon l'une quelconque des revendications 1 à 7, dans lequel l'écran principal (11) a une première taille, l'écran tactile (12) a une deuxième taille, la première partie (122) de l'écran tactile (12) a une troisième taille, et la deuxième partie (124) de l'écran tactile (12) a une quatrième taille, dans laquelle un point de contact de l'opération tactile dans la première partie (122) de l'écran tactile (12) correspond à un premier point de contrôle sur l'écran principal (11) selon une première relation proportionnelle entre la première taille et la troisième taille, et un point de contact de l'opération tactile dans la deuxième partie (124) de l'écran tactile (12) correspond à un deuxième point de contrôle sur l'écran tactile (12) selon une deuxième relation proportionnelle entre la deuxième taille et la quatrième taille.

9. Le procédé de commande tactile selon la revendication 8, dans lequel la première relation proportionnelle est un premier rapport obtenu en mettant à l'échelle la troisième taille à la première taille et en multipliant par un premier poids, et la seconde relation proportionnelle est un second rapport obtenu en mettant à l'échelle la quatrième taille à la deuxième taille et en multipliant par un deuxième poids, dans lequel le premier et le second poids sont toutes valeurs numériques supérieures à 1.

10. Un appareil électronique (10) comprenant :

un écran principal (11) ; un écran tactile (12), divisé en une première partie (122) et une deuxième partie (124), pour détecter une opération tactile effectuée par un utilisateur, et un processeur (13), couplé à l'écran principal (11) et à l'écran tactile (12), adapté pour recevoir l'opération tactile détectée par l'écran tactile (12) et déterminer si l'opération tactile est effectuée dans la première partie (122) ou la deuxième partie (124) de l'écran tactile (12), dans lequel lorsque l'opération tactile est effectuée dans la première partie (122) de l'écran tactile (12), le processeur (13) est adapté pour contrôler un cadre affiché sur l'écran principal (11) en fonction de l'opération tactile ; et lorsque l'opération tactile est effectuée dans la deuxième partie (124) de l'écran tactile (12), le processeur (13) est adapté pour contrôler un cadre affiché sur l'écran tactile (12) de l'opération tactile,

dans lequel le processeur (13) est **caractérisé en ce qu'**il est en outre adapté, lorsque le processeur (13) détermine que l'opération tactile est effectuée à la fois dans la première partie (122) et la deuxième partie (124) de l'écran tactile (12), basculer l'opération tactile effectuée dans la première partie (122) et la deuxième partie (124) de l'écran tactile (12) d'un premier à un second des modes de contrôle suivants :

contrôler uniquement l'image affichée sur l'écran principal (11) ;
contrôler uniquement le cadre affiché sur l'écran tactile (12) ; et
contrôler le cadre affiché sur l'écran principal (11) et le cadre affiché sur l'écran tactile (12) respectivement.

**11.** L'appareil électronique selon la revendication 10, dans lequel le processeur est adapté pour (13) contrôler le mouvement d'un curseur dans le cadre affiché sur l'écran principal (11) en fonction d'une trajectoire de déplacement de l'opération tactile dans la première partie (122) de l'écran tactile (12).

**12.** L'appareil électronique selon l'une quelconque des revendications 10 à 11, dans lequel le processeur (13) est adapté pour déterminer un geste produit par le mouvement de l'opération tactile dans la première partie (122) de l'écran tactile (12) et le contrôle du cadre affiché sur l'écran principal (11) pour exécuter une opération correspondant au geste.

**13.** L'appareil électronique selon l'une quelconque des revendications 10 à 12, dans lequel le processeur (13) est adapté pour sélectionner un objet affiché sur l'écran principal en fonction de l'opération tactile dans la première partie (122) de l'écran tactile (12) et afficher ou lire l'objet sélectionné à partir de l'écran principal (11) sur l'écran tactile (12) en fonction d'une autre opération tactile dans la première partie (122) de l'écran tactile (12).

**14.** L'appareil électronique selon l'une quelconque des revendications 10 à 13, dans lequel le processeur (13) est adapté pour sélectionner un objet affiché sur l'écran principal (11) en fonction de l'opération tactile dans la première partie (122) de l'écran tactile (12) et faire glisser l'objet sélectionné de l'écran principal à (11) l'écran tactile (12) lorsque l'opération tactile se déplace de la première partie (122) à la deuxième partie (124).

**15.** L'appareil électronique selon la revendication 14, dans lequel le processeur (13) est adapté de sorte qu'après le déplacement de l'objet sélectionné depuis l'écran principal (11) vers l'écran tactile (12), le processeur (13) affiche en outre une barre de commande pour faire fonctionner l'objet dans la deuxième partie (124) de l'écran tactile (12), dans lequel la barre de commande comprend une pluralité de boutons de commande, et le processeur (13) est adapté pour recevoir une opération tactile effectuée par l'utilisateur sur l'un des boutons de commande et exécuter une fonction de commande correspondant au bouton de commande sur l'objet.

**16.** L'appareil électronique selon l'une quelconque des revendications 10 à 15, dans lequel le processeur (13) est adapté pour déterminer un geste produit par le mouvement de l'opération tactile sur l'écran tactile (12) et contrôler le cadre affiché sur l'écran tactile (12) pour exécuter une commande correspondant au geste.

**17.** L'appareil électronique selon l'une quelconque des revendications 10 à 16, dans lequel l'écran principal (11) a une première taille, l'écran tactile (12) a une deuxième taille, la première partie (122) de l'écran tactile (12) a une troisième taille, et la deuxième partie (124) de l'écran tactile (12) a une quatrième taille, dans laquelle un point de contact de l'opération tactile dans la première partie (122) de l'écran tactile (12) correspond à un premier point de contrôle sur l'écran principal (11) selon une première relation proportionnelle entre la première taille et la troisième taille, et un point de contact de l'opération tactile dans la deuxième partie (124) de l'écran tactile (12) correspond à un second point de contrôle sur l'écran tactile (12) selon une deuxième relation proportionnelle entre la deuxième taille et la quatrième taille.

**18.** L'appareil électronique selon la revendication 17, dans lequel la première relation proportionnelle est un premier rapport obtenu en faisant passer la troisième taille à la première taille et en multipliant par un premier poids, et la seconde relation proportionnelle est un second rapport obtenu en mettant à l'échelle la quatrième taille à la deuxième taille et en multipliant par un deuxième poids, dans lequel le premier et le second poids sont toutes valeurs numériques quelconques supérieures à 1.

Main screen

11

10

Touch screen

Processor

12

124    122    13

FIG. 1

Detect a touch operation performed by a user on a touch screen ~ S202

Determine whether the touch operation is performed within a first portion or a second portion of the touch screen — S204

Within the second portion → Control a frame displayed on the touch screen according to the touch operation — S208

Within the first portion

Control a frame displayed on a main screen according to the touch operation ~ S206

# FIG. 2

WTR1605
WCD9321
WCN4660
Planning

FIG. 3

FIG. 4

FIG. 5

FIG. 6

FIG. 7

FIG. 8

FIG. 9

EP 2 530 573 B1

**EP 2 530 573 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2011047459 A